**Europäisches Patentamt**

**European Patent Office**

**Office européen des brevets**

(19)

(11) Veröffentlichungsnummer: **0 035 286**
**A1**

(12)

# EUROPÄISCHE PATENTANMELDUNG

(21) Anmeldenummer: **81200025.5**

(22) Anmeldetag: **12.01.81**

(51) Int. Cl.³: **G 01 P 3/66**

(30) Priorität: **27.02.80 CH 1566/80**

(43) Veröffentlichungstag der Anmeldung: **09.09.81**
**Patentblatt 81/36**

(84) Benannte Vertragsstaaten: **BE CH DE FR GB IT LI NL**

(71) Anmelder: **Werkzeugmaschinenfabrik Oerlikon-Bührle AG, Birchstrasse 155, CH-8050 Zürich (CH)**

(72) Erfinder: **Ettel, Godwin, Dipl.-Phys., Bettackerstrasse 11, CH-8152 Glattbrugg (CH)**

(54) **Vorrichtung zur Messung der Anfangsgeschwindigkeit eines aus einer Kanone abgeschossenen Geschosses.**

(57) Die Vorrichtung weist zwei Messspulen (LS1 und LS2) auf, welche von dem Geschoss (G) durchflogen werden. Jeder Messspule (LS1 und LS2) ist je ein erster Entkoppelungskondensator (C3, C4) oder je eine Bifilarwicklung (LT1 und LT2) eines Entkoppelungstransformators (T) sowie je ein zweiter Entkoppelungskondensator (C1, C2) zugeordnet. Diese symmetrische Anordnung vermindert die Messungenauigkeiten, die sich aus Stromänderungen der Stromquelle (Q), aus Störungen durch Sender und Atmosphäre ergeben. Eine Differenzierstufe ermöglicht die Berücksichtigung von Störungen durch den sich vom Geschoss ablösenden Treibspiegel.

<u>Vorrichtung zur Messung der Anfangsgeschwindigkeit eines
aus einer Kanone abgeschossenen Geschosses</u>

Die Erfindung betrifft eine Vorrichtung zur Messung der
Anfangsgeschwindigkeit eines aus einer Kanone abgeschossenen Geschosses gemäss den Merkmalen des Oberbegriffes
von Anspruch 1.

Solche Vorrichtungen zur Messung der Anfangsgeschwindigkeit sind bekannt. Aus dem Abstand der beiden Messspulen
voneinander und der Zeit, welche das Geschoss benötigt,
von der einen Messspule zur zweiten Messspule zu gelangen, d.h. aus der Zeitdifferenz zwischen den beiden vom
Geschoss in den beiden Messspulen erzeugten Signale,
lässt sich die Geschwindigkeit berechnen, mit welcher das
Geschoss durch die beiden Messspulen hindurch geflogen
ist. Bei unmagnetisierten Geschossen ist es notwendig,
einen konstanten Strom durch die beiden Messspulen hindurch fliessen zu lassen, der im Bereich der Messspulen
ein konstantes Magnetfeld erzeugt. Das durch die Messspulen hindurchfliegende Geschoss bewirkt eine Aenderung
des Magnetfeldes, wodurch eine Signalspannung in den beiden Messspulen induziert wird.

Diese bekannten Messvorrichtungen für die Anfangsgeschwindigkeit eines Geschosses haben verschiedene Nachteile:

1. Um die erforderliche Messgenauigkeit zu gewährleisten,
   ist eine sehr genaue Konstantstromquelle erforderlich,
   da jede Stromänderung zu Messungenauigkeiten führt.
   Die Messgenauigkeit ist daher sehr begrenzt, denn konstante Stromquellen sind nur begrenzt realisierbar.

2. Atmosphärische Störungen und unerwünschte Sender beeinflussen das erwähnte Magnetfeld der beiden Messspulen und beeinträchtigen die Messgenauigkeit wesentlich.

- 2 -

3. Bei Treibspiegelgeschossen beginnt sich bereits bei der Rohrmündung der Treibspiegel vom Geschoss abzulösen und hinter dem Geschoss herzufliegen, wobei der Abstand zwischen Geschoss und Treibspiegel sich schnell vergrössert. Es fliegen somit zwei Körper, nämlich Geschoss und Treibspiegel durch die beiden Spulen, wodurch die Messgenauigkeit zusätzlich stark beeinträchtigt wird.

Die vorliegende Erfindung bezweckt die Schaffung einer Messvorrichtung für die Anfangsgeschwindigkeit eines Geschosses, das eine grosse Messgenauigkeit erlaubt, d.h. die Messgenauigkeit soll von der Konstantstromquelle unabhängig sein. Ebenso sollen atmosphärische Störungen und unerwünschte Sender keinen Einfluss auf die Messgenauigkeit haben, und schliesslich soll der störende Einfluss des Treibspiegels berücksichtigt werden können.

Die erfindungsgemässe V-Null-Messvorrichtung, mit der diese Aufgabe gelöst wird, weist ausser den Merkmalen des Oberbegriffes auch die Merkmale des Kennzeichens von Anspruch 1 auf.

Die erfindungsgemässe V-Null-Messvorrichtung hat folgende Vorteile:

1. Atmosphärische Störungen und unerwünschte Sender können mit Hilfe dieser Anordnung kompensiert werden, wie aus der folgenden Beschreibung eines Ausführungsbeispieles ersichtlich ist.

2. Dank der symmetrischen Anordnung ermöglicht eine gegebene Konstantstromquelle wesentlich genauere Messungen, wie in der folgenden Beschreibung eines Ausführungsbeispieles deutlicher dargelegt ist.

3. Mit Hilfe einer Differenzierstufe ist es möglich, die
Anfangsgeschwindigkeit von Treibspiegelgeschossen mit
der erforderlichen Genauigkeit zu bestimmen.

- 4 -

Ausführungsbeispiele der erfindungsgemässen V-Null-Messeinrichtung sind im folgenden anhand der beigefügten
Zeichnung ausführlich beschrieben. Es zeigt:

Fig. 1   ein elektrisches Schaltschema der gesamten V-
Null-Messanlage gemäss einem ersten Ausführungsbeispiel;

Fig. 2   dasselbe wie Fig. 1 gemäss einem zweiten Ausführungsbeispiel;

Fig. 3   ein Diagramm des Spannungsverlaufes beim Durchtritt des Geschosses durch die Messspulen;

Fig. 4   ein Auswertgerät gemäss einem weiteren Ausführungsbeispiel.

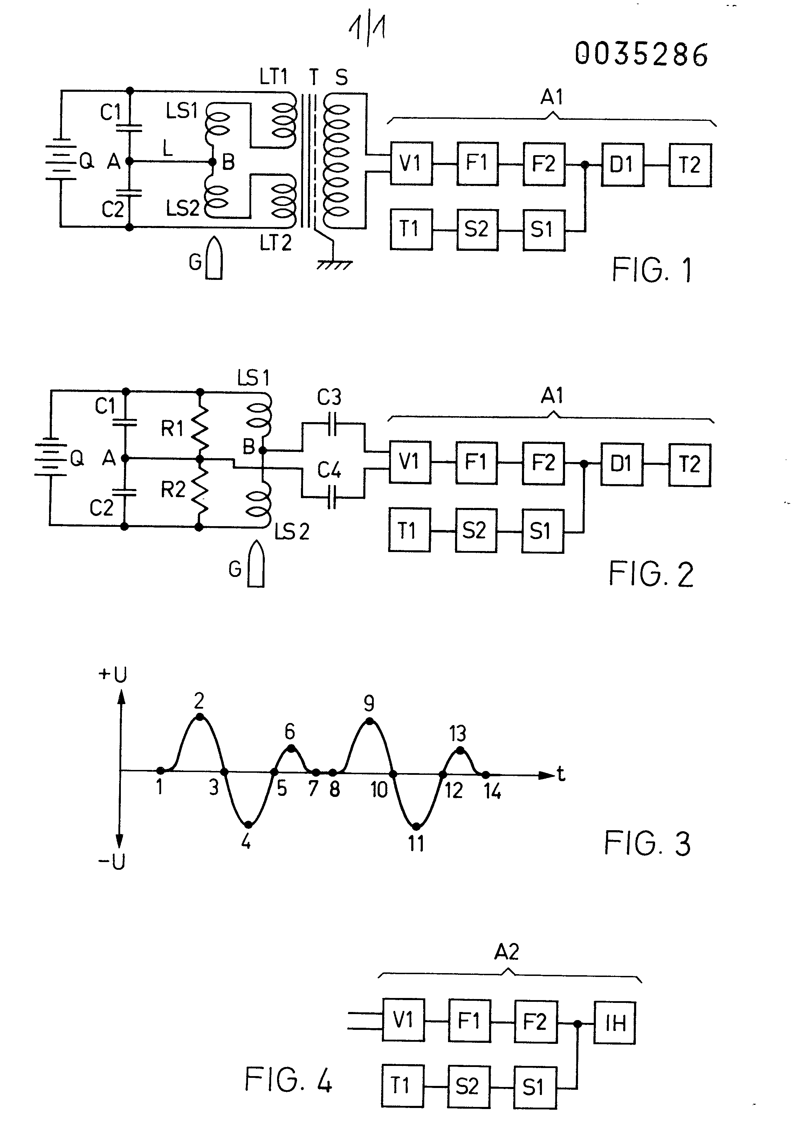

Gemäss Fig. 1 weist die V-Null-Messvorrichtung des ersten
Ausführungsbeispiels eine Konstantstromquelle Q auf, welche mit dem einen Anschluss je eines Entkoppelungskondensators C1 und C2 verbunden ist. Der andere Anschluss der
beiden Entkoppelungskondensatoren C1, C2 ist mit einem
gemeinsamen Knotenpunkt A verbunden. Ausserdem ist die
Konstantstromquelle Q mit dem einen Anschluss je einer
Bifilarwicklung LT1 und LT2 verbunden. Der andere Anschluss der einen Bifilarwicklung LT1 ist über eine Messspule LS1 und der andere Anschluss der anderen Bifilarwicklung LT2 ist über eine zweite Messspule LS2 mit einem
gemeinsamen Knotenpunkt B verbunden. Die beiden Knotenpunkte A und B sind über eine gemeinsame Leitung L miteinander verbunden. Die beiden Bifilarwicklungen LT1 und
LT2 sind Bestandteil eines Transformators T, der noch
eine Sekundärwicklung S aufweist, welche an einen Verstärker V1 eines Auswertgerätes A1 angeschlossen ist. Wie
aus Fig. 1 klar ersichtlich ist, sind sämtliche bisher beschriebenen Elemente symmetrisch angeordnet. An den Verstärker V1 sind in Serie zwei Filter F1 und F2 angeschlossen. An den zweiten Filter F2 sind einerseits eine Differenzierstufe D1 und ein Trigger T2 und anderseits über
zwei Schwellwertschalter S1, S2 ein anderer Trigger T1

- 5 -

angeschlossen. Die Organe F1, F2, T1, T2, S1, S2 und D1
bilden das Auswertgerät A1.

Gemäss Fig. 2 weist die V-Null-Messvorrichtung des zweiten Ausführungsbeispieles eine Konstantstromquelle Q auf,
welche mit dem einen Anschluss je eines Entkoppelungskondensators C1 und C2 verbunden ist. Der andere Anschluss
der beiden Entkoppelungskondensatoren C1, C2 ist mit einem
gemeinsamen Knotenpunkt A verbunden. Parallel zum ersten
Entkoppelungskondensator C1 ist ein ohmscher Widerstand
R1 angeordnet und parallel zum anderen Entkoppelungskondensator C2 ist ein zweiter ohmscher Widerstand R2 angeordnet. Ausserdem ist die Konstantstromquelle Q mit dem
einen Anschluss der Messspule LS1 und dem einen Anschluss
der anderen Messspule LS2 verbunden. Der andere Anschluss
der beiden Messspulen LS1 und LS2 ist mit einem gemeinsamen Knotenpunkt B verbunden. Ein dritter Koppelungskondensator C3 ist einerseits an den Knotenpunkt B und
anderseits an den Verstärker V1 angeschlossen. Ein vierter Koppelungskondensator C4 ist einerseits an den
Knotenpunkt A und anderseits an den Verstärker V1 angeschlossen. Das Auswertgerät A1 ist gleich wie beim ersten
Ausführungsbeispiel gemäss Fig. 1 ausgebildet.

Gemäss Fig. 4 kann die Differenzierstufe D1 und der Trigger T2 durch einen Impulshöhendetektor IH ersetzt werden.

Die Wirkungsweise der beschriebenen Vorrichtung zur Messung der Anfangsgeschwindigkeit eines aus einer Kanone
abgeschossenen Geschosses G ist wie folgt:

a) Gemäss Fig. 3 wird bei der Annäherung des Geschosses
   G an die erste Messspule LS1 ein Signal erzeugt, das
   entsprechend der Strecke 1-2 an Intensität zunimmt,d.h.
   es wird eine wachsende positive Spannung U indiziert.

b) Beim Eintritt des Geschosses G ins Innere der Messspule LS1 sinkt die Intensität des Signals gemäss der
Strecke 2-3 wieder auf den Wert Null, d.h. die induzierte Spannung U verschwindet wieder.

c) Beim Austritt des Geschosses G aus der Messspule LS1
wird wieder ein Signal erzeugt, dessen Intensität in
entgegengesetzter Richtung gemäss der Strecke 3-4 zunimmt, d.h. es wird eine wachsende negative Spannung
-U induziert.

d) Mit wachsender Entfernung des Geschosses G von der
Messspule LS1 sinkt die Intensität des Signales wieder
auf den Wert Null, d.h. die negative Spannung -U verschwindet wieder gemäss der Strecke 4-5.

Beim Durchtritt des Geschosses G durch die zweite Messspule LS2 wiederholt sich der beschriebene Vorgang entsprechend dem Streckenzug 8-9-10-11-12, d.h. es wird wieder eine wachsende positive Spannung induziert, welche
verschwindet, worauf eine wachsende negative Spannung induziert wird, welche mit wachsender Entfernung des Geschosses G von der Messspule LS2 verschwindet.

Die Form dieser Kurve ist von verschiedenen Faktoren abhängig, insbesondere von folgenden Faktoren:

1. Denkt man sich die Messspulen LS1 und LS2 als Kreise,
   so wird das Geschoss nicht immer genau durch das Zentrum dieser Kreise fliegen, insbesondere wegen der
   Präzision bei Drallgeschossen. Die Form der in Fig. 3
   dargestellten Kurve ist von dieser Abweichung abhängig.

2. Der hinter dem Geschosskörper herfliegende Treibspiegel
   bewirkt ebenfalls eine Veränderung der in Fig. 3 dargestellten Kurve. Durch die Strecken 5-6-7 und 12-13-
   14 ist die vom Treibspiegel bewirkte Störung angedeutet.

- 7 -

3. Zur Berücksichtigung dieser Störeinflüsse ist es vorteilhaft, die in Fig. 3 dargestellte Kurve zu differenzieren.

Es lassen sich dann mit dem Auswertgerät folgende Werte bestimmen:
Mit den Schwellwertschaltern S1 und S2 und dem Trigger T1 werden die Nulldurchgänge, d.h. die Punkte 3,5,10 und 12 bestimmt.

Mit der Differenzierstufe D1 und dem Trigger T2 lassen sich die Wendetangenten und mit dem Impulshöhendetektor IH die Impulshöhen, das sind die Punkte 2,4,9 und 11, bestimmen.                                    Falls der Treibspiegel nicht aus Aluminium sondern aus einem Material hergestellt ist, das ähnliche magnetische Eigenschaften wie der Geschosskörper aufweist, kann die in Fig. 3 dargestellte Kurve zweimal differenziert werden, wobei eine weitere, in der Zeichnung nicht dargestellte Differenzierstufe der Auswertanlage beigefügt wird.

Die Impulshöhen, bzw.
die vier Nulldurchgänge 3,5,10 und 12 sowie die vier Wendetangenten 2,4,9 und 11 gestatten es einerseits, den Abstand des Geschosses vom erwähnten Zentrum der Messspulen LS1 und LS2 zu bestimmen und anderseits unabhängig davon den Abstand des Treibspiegels vom Geschosskörper. Dank dieser Trennung der beiden Störgrössen, nämlich der Achsauslenkung und des Abstandes zwischen Geschoss und Treibspiegel, ist es auch möglich, mit Hilfe eines Rechenprogrammes die Abschussgeschwindigkeit des Geschosses relativ genau zu berechnen.

Die beiden Tiefpassfilter F1 und F2 ermöglichen es, überlagerte hochfrequente Störungen auszuschalten.

Die beiden Trigger T1 und T2 sind notwendig, um den Nulldurchgang möglichst genau zu bestimmen, denn die genaue Bestimmung der Anfangsgeschwindigkeit V-Null ist von

- 8 -

dieser Nulldurchgangsbestimmung abhängig.

Wie aus Fig. 1 ersichtlich, fliesst der Strom durch die
beiden Bifilarwicklungen LT1 und LT2 in entgegengesetzter Richtung. Dank dieser Anordnung können Störungen
durch Schwankungen der Konstantstromquelle Q weitgehend
ausgeschaltet werden.

Patentansprüche:

1. Vorrichtung zur Messung der Anfangsgeschwindigkeit ($V_O$) eines aus einer Kanone abgeschossenen Geschosses (G), enthaltend:
   - zwei im Abstand (L) voneinander angeordnete Messspulen (LS1, LS2), durch welche das Geschoss (G) beim Austritt aus der Kanone hindurch fliegt,
   - einen Kondensator (C1, C2),
   - Organe (T; C3, C4) zum Auskoppeln der vom Geschoss (G) in den Messspulen (LS1, LS2) induzierten Signale,
   - einen Verstärker (V1) zum Verstärken der Signale,
   - ein Auswertgerät (A1, A2) zum Auswerten der Signale,
   - eine Konstantstromquelle (Q) zum Speisen der Messspulen (LS1, LS2), dadurch gekennzeichnet, dass die beiden Messspulen (LS1, LS2) mit zwei Kondensatoren (C1, C2) und mit zwei Organen (LT1, LT2; C3, C4) zum Auskoppeln der Signale in absolut symmetrischer Weise an die Konstantstromquelle (O) angeschlossen sind.

2. Vorrichtung nach Anspruch 1, dadurch gekennzeichnet, dass
   - der eine Anschluss jeder Messspule (LS1, LS2) über eine Bifilarwicklung (LT1, LT2) mit dem einen Anschluss eines zugeordneten Entkoppelungskondensators (C1, C2) verbunden ist,
   - der andere Anschluss jeder Messspule (LS1, LS2) - über einen ersten Knotenpunkt (B), eine Leitung (L) und einen zweiten Knotenpunkt (A) - mit dem anderen Anschluss der beiden Entkoppelungskondensatoren (C1, C2) verbunden ist, wobei die beiden Bifilarwicklungen (LT1, LT2) Bestandteile eines die Auskoppelungsorgane (T) bildenden Auskoppelungstransformators (T) bilden.

3. Vorrichtung nach Anspruch 1, dadurch gekennzeichnet, dass

- der eine Anschluss jeder Messspule (LS1, LS2) über einen Knotenpunkt (B) direkt an einen gemeinsamen dritten Koppelungskondensator (C3) angeschlossen ist,

- der andere Anschluss jeder Messspule (LS1, LS2) über die ersten Koppelungskondensatoren (C1, C2) und über einen Knotenpunkt (A) an einen gemeinsamen vierten Entkoppelungskondensator (C4) angeschlossen ist, wobei parallel zu den beiden ersten Entkoppelungskondensatoren (C1, C2) je ein ohmscher Widerstand (R1, R2) angeordnet ist.

4. Vorrichtung nach den Ansprüchen 1 - 3, dadurch gekennzeichnet, dass an den Verstärker (V1) in Serie mindestens eine Differenzierstufe (D1) angeschlossen ist.

5. Vorrichtung nach den Ansprüchen 1 - 3, dadurch gekennzeichnet, dass das Auswertgerät (A1) in Serie zum Verstärker (V1) einen ersten und einen zweiten Tiefpassfilter (F1, F2) enthält, dass an den zweiten Tiefpassfilter (F2) in Serie eine Differenzierstufe (D1) und ein Trigger (T2) angeschlossen sind, und dass an den zweiten Tiefpassfilter (F2) parallel zur Differenzierstufe (D1) und zum Trigger (T2) zwei Schwellwertschalter (S1, S2) und ein anderer Trigger (T1) angeschlossen sind.

6. Vorrichtung nach den Ansprüchen 2, 4 und 5, dadurch gekennzeichnet, dass die beiden Bifilarwicklungen (LT1, LT2) in entgegengesetzter Richtung von Gleichstrom (I) durchflossen sind.

7. Vorrichtung nach Anspruch 5, dadurch gekennzeichnet, dass die Differenzierstufe (D1) und der erste Trigger (T2) durch einen Impulshöhendetektor (IH) ersetzt ist.

0035286

FIG. 1

FIG. 2

FIG. 3

FIG. 4

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe, soweit erforderlich, der maßgeblichen Teile | betrifft Anspruch | |
| | JOURNAL OF SCIENTIFIC INSTRUMENTS, Band 36, Januar 1959, Seiten 35, 36 London, G.B. V. FIDLERIS et al.: "Measurement of the falling velocity of particles in opaque fluids" <br> * Seite 35, Spalte 1, Zeile 7 - Seite 35, Spalte 2, Zeile 49; Figur 2 * <br> -- | 1 | G 01 P 3/66 |
| | FR - A - 1 156 907 (GALLOIS) <br> * Seite 2, Spalte 2, Zeile 44 - Seite 3, Spalte 1, Zeile 27; Figuren 4,5 * <br> -- | 1,3,4 | RECHERCHIERTE SACHGEBIETE (Int. Cl ) <br><br> G 01 P 3/66 |
| | FR - A - 1 543 346 (S.F.I.M.) <br> * Seite 2, Spalte 1, Zeilen 35-47; Figur 5 * <br> -- | 4,5 | |
| A | US - A - 2 400 189 (CARLSON et al.) <br> * Seite 2, Spalte 1, Zeilen 64-76; Figur 2 * <br> ---- | 1,2,4 | |

Der vorliegende Recherchenbericht wurde für alle Patentansprüche erstellt.

| Recherchenort | Abschlußdatum der Recherche | Prüfer |
|---|---|---|
| Den Haag | 25-05-1981 | HANSEN |

EPA form 1503.1 06.78